# EUROPÄISCHE PATENTSCHRIFT

(11) **EP 1 779 025 B1**
(45) Veröffentlichungstag und Bekanntmachung des Hinweises auf die Patenterteilung: **28.05.2008**
(21) Anmeldenummer: 05776340.1
(22) Anmeldetag: 04.08.2005
(51) Int. Cl.: F17C 3/02

(54) **SPEICHERBEHÄLTER FÜR KRYOGENE MEDIEN**
STORAGE CONTAINER FOR CRYOGENIC MEDIA
RECIPIENT DE STOCKAGE POUR SUBSTANCES CRYOGENES

(30) Priorität: 17.08.2004 DE 102004039840
(43) Veröffentlichungstag der Anmeldung: 02.05.2007
(73) Patentinhaber: Linde Aktiengesellschaft, 80807 München (DE)
(72) Erfinder: REESE, Wilfried-Henning, 85716 Unterschleissheim (DE)
(86) Internationale Anmeldenummer: PCT/EP2005/008475
(87) Internationale Veröffentlichungsnummer: WO 2006/018146

(56) Entgegenhaltungen:
- WO-A-02/35143
- DE-A1- 10 005 214
- GB-A- 584 460
- US-A- 3 304 729
- US-A- 3 864 928
- US-A- 5 421 161

## Beschreibung

Die Erfindung betrifft einen Speicherbehälter, insbesondere Speicherbehälter für tiefkalte Flüssigkeiten, vorzugsweise für flüssigen Wasserstoff, aufweisend einen Außenbehälter, wenigstens einen Innenbehälter, eine zwischen dem Außenbehälter und dem oder den Innenbehältern angeordnete, wenigstens eine metallische Schicht aufweisende Isolation sowie zwei oder mehr Prozessleitungen.

Unter dem Begriff "Prozessleitung(en)" seien alle, durch den Außenbehälter hindurchführende, an den bzw. die Innenbehälter angeordnete Leitungen, über die der bzw. die Innenbehälter mit einem Medium befüllt oder über die ein Medium aus dem bzw. den Innenbehältern entnommen wird, zu verstehen.

Im Folgenden werden bei den Bezeichnungen spezieller kryogener Medien entsprechend ihrem Aggregatzustand die Buchstaben "G" für "gasförmig" und "L" für "flüssig" bzw. "liquid" vorangestellt; also z. B. GH₂ bzw. LH₂ für gasförmigen bzw. flüssigen Wasserstoff.

Insbesondere Wasserstoff gewinnt gegenwärtig durch den steigenden Energiebedarf und das gestiegene Umweltbewusstsein als Energieträger zunehmend an Bedeutung. So werden bereits Lastkraftwagen, Busse sowie Personenkraftwagen mittels mit Wasserstoff-betriebenen Motoren bzw. Brennstoffzellen angetrieben. Darüber hinaus sind erste Versuche im Gange, Flugzeuge mit den genannten Medien anzutreiben.

Die Speicherung des Wasserstoffs "an Bord" der oben genannten Verkehrsmittel ist dabei in flüssiger Form am sinnvollsten. Zwar muss der Wasserstoff dazu auf etwa 21 K abgekühlt und auf dieser Temperatur gehalten werden - was nur durch entsprechende Isoliermaßnahmen an den Speicherbehältern bzw. -tanks realisiert werden kann -, doch ist eine Speicherung in gasförmigem Zustand aufgrund der geringen Dichte von GH₂ in der Regel in den oben genannten Verkehrsmitteln ungünstiger, da die Speicherung hierbei in großvolumigen und schweren Speicherbehältern bei hohen Drücken erfolgen muss.

Wird aus derartigen Speicherbehältern über einen längeren Zeitraum kein Medium entnommen, so kommt es im Inneren des Innenbehälters aufgrund des nicht zu verhindernden Wärmeeinfalles aus der Umgebung auf den Innenbehälter in dem in ihm gelagerten Medium zu einem Temperatur- und Druckanstieg. Entsprechend der Druckauslegung des Innenbehälters muss dann von Zeit zu Zeit gasförmiges Medium über eine Befüll- und/oder Entnahmeleitung - in der beispielsweise ein Überdruckventil vorgesehen ist - aus dem Speicherbehälter abgelassen bzw. abgeblasen werden. Ist der Speicherbehälter in einem Kraftfahrzeug vorgesehen, so geht diese Menge des gasförmigen Mediums ungenutzt verloren, wenn nicht eine zusätzliche Speichervorrichtung, wie bspw. ein Metallhydridspeicher, für die abzublasende Gas- bzw. Mediummenge vorgesehen ist.

Herkömmliche Speicherbehälter für flüssigen Wasserstoff ermöglichen Standzeiten von zwei bis drei Tagen, bevor es zu einem Abdampfen und damit Verlust an gasförmigem Wasserstoff kommt. Die Akzeptanz von Wasserstoff als Energieträger - insbesondere bei Personenkraftwagen - wird u. a. auch von der möglichen Länge der Standzeit eines Personenkraftwagens abhängen. Ein Abblasen von Wasserstoff nach zwei bis drei Tagen wird vom Kunden sicherlich nicht akzeptiert werden.

Die Isolation von Speicherbehältern, die der Speicherung kryogener Flüssigkeiten bzw. Medien dienen, wird im Regelfall durch eine so genannte Superisolation erreicht. Diese besteht aus mehreren Schichten dünner Aluminiumfolien und/oder Aluminiumbedampfter Folien mit einem dazwischen liegenden Glasgewebe oder einer dazwischen liegenden Glasvliesschicht. Das Glasgewebe bzw. die Glasvliesschicht verhindern, dass sich die Aluminiumfolien und/oder Aluminium-bedampften Folien berühren und so einen thermischen Kurzschluss auslösen.

Es wurde darüber hinaus bereits vorgeschlagen, innerhalb des Zwischenraumes gattungsgemäßer Speicherbehälter in einer bestimmten Temperaturebene ein Aluminium- oder Kupferschild, das den Innenbehälter im Regelfall vollständig umgibt, anzuordnen und thermisch mit einer Entnahmeleitung, über die das verdampfte kryogene Medium aus dem Innenbehälter abgezogen wird, zu verpunkten. Dieses Aluminium- oder Kupferschild wird dann bei jedem Abblasen von kryogenem Medium durch das abströmende kryogene Medium (wieder) gekühlt. Der bis zur derjenigen Temperaturebene, auf der das Aluminium- oder Kupferschild angeordnet ist, aus der Umgebung einfallende Wärmestrom wird durch die Anwärmung des abzublasenden kryogenen Mediums von diesem aufgenommen und wieder nach außen geführt. Der Wärmestrom auf den Innenbehälter kann dadurch bereits wesentlich verringert werden. Im Prinzip können auch mehrere Aluminium- oder Kupferschilde vorgesehen werden, wodurch die Isolationswirkung weiter verbessert wird. Der konstruktive Aufwand für derartige Speicherbehälter ist jedoch erheblich.

Aus der nicht vorveröffentlichten deutschen Patentanmeldung 103 53 382 ist ein gattungsgemäßer Speicherbehälter für kryogene Medien bekannt. Bei diesem steht wenigstens eine der Befüll- und/oder Entnahmeleitungen mit der bzw. den metallischen Schichten der zwischen den Außen- und dem Innenbehälter angeordneten (Super)Isolation im direkten und/oder indirekten Wärmekontakt. Eine derartige Konstruktion ist jedoch oftmals aus technischen Gründen nicht oder nur mit einem unverhältnismäßig hohen Aufwand realisierbar.

Die zu kühlenden Leitungen müssen zur Wärmeübertragung über eine bestimmte Länge an dem Schild bzw. der oder den metallischen Schichten wärmeleitend kontaktiert werden, damit ein Wärmeübergang stattfinden kann. Diese wärmeleitende Kontaktierung erfolgt durch Verlöten oder Verkleben mit Wärmeleitkleber der zu kontaktierenden Teile. Diese Vorgänge nehmen während des Fertigungsprozesses erhebliche Zeit in Anspruch. Zusätzlich wird der laufende Fertigungsprozess durch diese Maßnahmen unterbrochen. Aus konstruktiven Gründen können darüber hinaus die Prozessleitungen oftmals nicht in der erforderlichen Länge kontaktiert werden, da im Isolierraum nicht der dazu erforderliche Raum zur Verfügung steht.

Aufgabe der vorliegenden Erfindung ist es, einen gattungsgemäßen Speicherbehälter anzugeben, wie er beispielsweise aus dem, dem einleitenden Teil des Anspruches 1 entsprechenden Dokument US 3864928 bekannt ist, welches als nächstliegender Stand der Technik auzusehen wird, bei dem der Wärmeeinfall auf das in ihm gespeicherte Medium reduziert wird und der mit einfachen Mitteln eine deutliche Verringerung der Menge an abzublasendem Medium ermöglicht.

Zur Lösung dieser Aufgabe wird ein Speicherbehälter vorgeschlagen, der dadurch gekennzeichnet ist, dass die oder wenigstens zwei der Prozessleitungen Mittel zum Abblasen von verdampfter, tiefkalter Flüssigkeit aus dem oder den Innenbehältern aufweisen, wobei die Mittel zum Abblasen von verdampfter, tiefkalter Flüssigkeit derart ausgebildet sind, dass sie eine Regelung der abzublasenden Gasmenge ermöglichen.

Erfindungsgemäß weisen nunmehr beide - sofern lediglich zwei Prozessleitungen vorgesehen sind - bzw. wenigstens zwei der Prozessleitungen geeignete Mittel zum Abblasen von verdampfter, tiefkalter Flüssigkeit - also dem durch Wärmeeinfall auf den Innenbehälter entstandenen Gas - auf; dies hat zur Folge, dass diese Prozessleitungen, über die ja ein nicht unerheblicher Wärmeeinfall in den bzw. die Innenbehälter erfolgt, mit jedem Abblasen von kaltem Gas erneut gekühlt werden.

Soll ein Abblasen beispielsweise über zwei, unterschiedliche Längen aufweisende Prozessleitungen, die sich ansonsten nicht unterscheiden, erfolgen, so ermöglicht die vorgenannte Ausgestaltung, dass über die kürzere Prozessleitung, über die mehr Wärme in den Innenbehälter gelangt, eine größere Gasmenge als über die längere der beiden Prozessleitungen abgeblasen wird.

Hierbei sind - entsprechend einer vorteilhaften Ausgestaltung des erfindungsgemäßen Speicherbehälters - die Mittel zum Abblasen von verdampfter, tiefkalter Flüssigkeit vorzugsweise als Ventile, insbesondere Überströmventile, und/oder Blenden ausgebildet.

Den erfindungsgemäßen Speicherbehälter weiterbildend können neben den Prozessleitungen eine oder mehrere zusätzliche Abblasleitungen vorgesehen werden, wobei diese ebenfalls Mittel zum Abblasen, vorzugsweise zum geregelten Abblasen von verdampfter, tiefkalter Flüssigkeit aufweisen.

Die vorgenannten, zusätzlichen Abblasleitungen stehen hierbei vorzugsweise mit einer oder mehreren Prozessleitungen in direktem und/oder indirekten Wärmekontakt.

Ein direkter Wärmekontakt kann beispielsweise mittels eines Metallklebebandes, eines Wärmeleitklebers und/oder einer Wärmeleitpaste erfolgen. Aber auch mittels eines indirekten Wärmekontaktes - also mittels der Übertragung der Wärmeenergie durch Strahlung - kann ggf. ein ausreichender Übertrag der benötigten Kühlenergie von den zusätzlichen Abblasleitungen auf die Prozessleitungen erfolgen.

Derartige zusätzliche Abblasleitungen können - verglichen mit den Prozessleitungen - mit geringeren Durchmessern ausgeführt werden, da sich die Menge an abzublasendem Medium bei dem erfindungsgemäßen Speicherbehälter gegenüber den zum Stand der Technik zählenden Speicherbehälterkonstruktionen wesentlich verringert.

Vereinfacht ausgedrückt kann gesagt werden, dass der erfindungsgemäße Speicherbehälter mehrere "Abblasewege bzw. -möglichkeiten" aufweist; dies hat zur Folge, dass die Menge des abgeblasenen Gases - verglichen mit den zum Stand der Technik zählenden Speicherbehälterkonstruktionen - verringert wird, da die Anwärmeenergie des abblasenden Gases bzw. der abblasenden Gasströme besser ausgenutzt werden kann.

Im Prinzip kann die über Prozessleitungen und ggf. vorzusehende, zusätzliche Abblaseleitungen abzublasende Gasmenge für jede der vorgenannten Leitungen separat geregelt werden. Dadurch ist eine optimale Anpassung der abzublasenden Gasmenge an die jeweiligen Leitungsparameter, wie Material, Länge, etc., möglich.

Vorzugsweise ist daher ein Managementsystem vorzusehen, das der Koordination und Regelung der Abblaseströme bzw. -mengen über die unterschiedlichen Abblasewege dient.

Mittels der Erfindung wird nunmehr erreicht, dass die abzublasende Menge an verdampftem kryogenen Medium soweit reduziert bzw. vernachlässigbar gering wird, dass dieser vorbeschriebene Nachteil der Akzeptanz, insbesondere des Mediums Wasserstoff, nicht länger entgegen stehen sollte. Wird nunmehr in einem Kraftfahrzeug, das einen erfindungsgemäßen Speicherbehälter aufweist, bspw. zusätzlich ein Metallhydridspeicher vorgesehen, so kann mit diesem die geringe Menge an abzublasendem Medium aufgefangen und gespeichert werden.

Der erfindungsgemäße Speicherbehälters eignet sich daher insbesondere zur Verwendung als ortsbeweglicher Speicherbehälter, vorzugsweise als Speicherbehälter für Kraftfahrzeuge jeglicher Art.

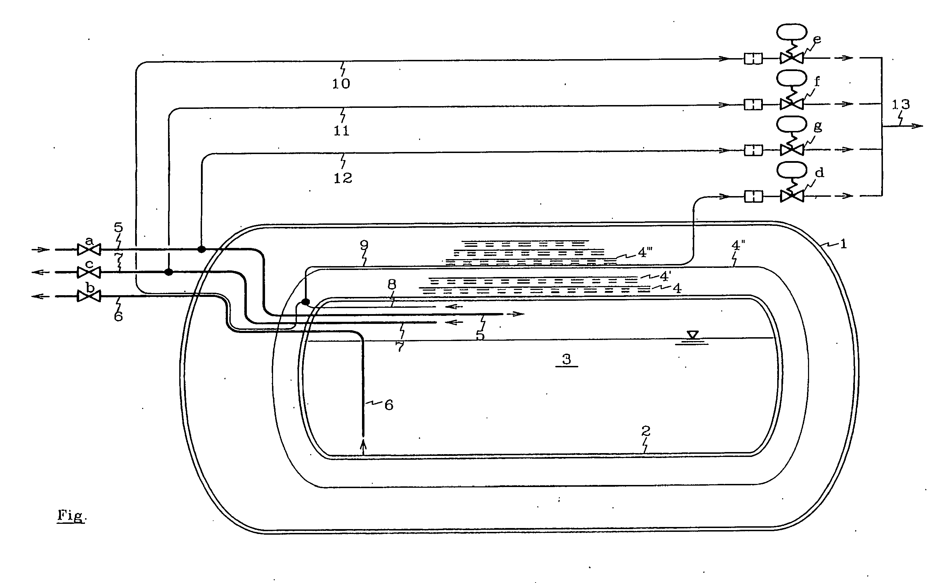

Der erfindungsgemäße Speicherbehälter sowie weitere Ausgestaltungen desselben, die Gegenstände der abhängigen Patentansprüche darstellen, seien im Folgenden anhand des in der Figur dargestellten Ausführungsbeispieles näher erläutert.

Hierbei zeigt die Figur in schematisierter Form eine seitliche Schnittdarstellung durch einen Speicherbehälter für tiefkalte Flüssigkeiten, wie beispielsweise flüssigen Wasserstoff.

Ein derartiger Speicherbehälter - wie er beispielsweise in mit flüssigem Wasserstoff betriebenen Kraftfahrzeugen zum Einsatz kommt - weist einen Außenbehälter 1, einen Innenbehälter 2, in dem sich das zu speichernde Medium 3 befindet, und mehrere zwischen dem Außenbehälter 1 und dem Innenbehälter 2 angeordnete metallische Schichten 4, 4', 4", 4"',... auf; letztere bilden die erforderliche (Super)Isolation.

Der dargestellte Speicherbehälter weist ferner drei Prozessleitungen, nämlich eine Befüllleitung 5, über die dem Innenbehälter 2 das zu speichernde Medium zugeführt wird, sowie zwei Entnahmeleitungen 6 und 7 auf, über die flüssiges bzw. gasförmiges Medium abgezogen werden kann. In jeder der vorgenannten Prozessleitungen 5, 6 und 7 ist ein Absperrventil a, b, bzw. c vorgesehen.

Vorgesehen ist ferner eine zusätzliche Abblasleitung 8, über die im Gasraum des Innenbehälters 2 gebildetes gasförmiges Medium abgezogen werden kann. Diese Abblasleitung 8 teilt sich auf in eine Abblasleitung 9, die mit den vorgenannten metallischen Schichten 4, 4', 4", ... in Wärmekontakt steht, und in eine Abblasleitung 10, die im Wärmekontakt mit der Entnahmeleitung 6 steht. Darüber hinaus sind der Befüllleitung 5 sowie der Entnahmeleitung 7 Abblasleitungen 11 bzw. 12 zugeordnet.

Die vorgenannten Abblasleitungen 9 bis 12 weisen jeweils ein Regelventil d, e, f bzw. g auf, mittels derer die Menge des über die jeweilige Abblasleitung abströmenden Gases geregelt werden kann. Die über die vorgenannten Abblasleitungen abströmenden Gasmengen werden in der Sammelleitung 13 zusammengeführt und an die Atmosphäre abgegeben und/oder einer weiteren Verwendung zugeführt, wie beispielsweise für die weitere Verwendung in einer Brennstoffzelle zur Erzeugung von elektrischer Energie, welche die Bordspannungsversorgung unterstützt. Da die zu erwartende Menge sehr gering ist, kann die Abbblasemenge durch katalytische Reaktion oder Verbrennung mit einem Luft-Sauerstoff-Gemisch zu Wasser umgewandelt und an die Umgebung abgegeben werden.

Mittels eines geeigneten Managementsystems kann nunmehr gezielt über die Befüllleitung 5/Abblasleitung 12, die Entnahmeleitung 7/Abblasleitung 11 und/oder die Abblasleitungen bzw. Leitungsabschnitte 8, 9 und 10 gasförmiges Medium aus dem Gasraum des Innenbehälters 2 entnommen werden; dadurch werden die vorgenannten Leitungen sowie über die Abblasleitung 9 eine oder mehrere der metallischen Schichten 4, 4', 4", ... der Isolation gekühlt, woraus die erwünschte Reduzierung des Wärmeeinfalls aus der Umgebung in das gespeicherte Medium verringert wird.

## Patentansprüche

1. Speicherbehälter, insbesondere Speicherbehälter für tiefkalte Flüssigkeiten, vorzugsweise für flüssigen Wasserstoff, aufweisend einen Außenbehälter, wenigstens einen Innenbehälter, eine zwischen dem Außenbehälter und dem oder den Innenbehältern angeordnete, wenigstens eine metallische Schicht aufweisende Isolation sowie zwei oder mehr Prozessleitungen, **dadurch gekennzeichnet, dass** die oder wenigstens zwei der Prozessleitungen (5, 6, 7) Mittel zum Abblasen von verdampfter, tiefkalter Flüssigkeit aus dem oder den Innenbehältern (2) aufweisen und diese Mittel zum Abblasen von verdampfter, tiefkalter Flüssigkeit derart ausgebildet sind, dass sie eine Regelung der abzublasenden Gasmenge ermöglichen.

2. Speicherbehälter nach Anspruch 1, **dadurch gekennzeichnet, dass** die Mittel zum Abblasen von verdampfter, tiefkalter Flüssigkeit als Ventile (a - g), vorzugsweise Überströmventile, und/oder Blenden ausgebildet sind.

3. Speicherbehälter nach Anspruch 1 oder 2, **dadurch gekennzeichnet, dass** zusätzlich zu den Prozessleitungen (5, 6, 7) wenigstens eine Abblasleitung (8 - 13), die Mittel zum Abblasen, vorzugsweise zum geregeltem Abblasen von verdampfter, tiefkalter Flüssigkeit aufweist, vorgesehen ist.

4. Speicherbehälter nach Anspruch 3, **dadurch gekennzeichnet, dass** die oder wenigstens eine der Abblasleitungen (8 - 13) mit der oder wenigstens einer der metallischen Schichten (4, 4', 4", ...) der Isolation in direktem und/oder indirektem Wärmekontakt steht.

5. Speicherbehälter nach Anspruch 3 oder 4, **dadurch gekennzeichnet, dass** die oder wenigstens eine der Abblasleitungen (8 - 13) mit einer oder mehreren Prozessleitungen (5, 6, 7) in direktem und/oder indirektem Wärmekontakt steht.

6. Verwendung eines Speicherbehälters nach einem der vorhergehenden Ansprüche als ortsbeweglicher Speicherbehälter, insbesondere als Speicherbehälter für Kraftfahrzeuge.

## Claims

1. Storage container, in particular storage container for extremely cold fluids, preferably for liquid hydrogen, comprising an external container, at least one internal container, insulation having at least one metallic layer arranged between the external container and the one or more internal containers, and two or more process lines, **characterized in that** the process lines, or at least two of the process lines (5, 6, 7), comprise means for releasing evaporated, extremely cold fluid from the one or more internal containers (2) and these means for releasing evaporated, extremely cold fluid are embodied in such a way that they permit control of the amount of gas to be released.

2. Storage container according to Claim 1, **characterized in that** the means for releasing evaporated, extremely cold fluid are embodied as valves (a - g), preferably overflow valves, and/or orifices.

3. Storage container according to Claim 1 or 2, **characterized in that**, provided in addition to the process lines (5, 6, 7), is at least one release line (8 - 13), which comprises means for the release, and preferably for the controlled release, of evaporated, extremely cold fluid.

4. Storage container according to Claim 3, **characterized in that** the release lines, or at least one of the release lines (8 - 13), is or are in direct and/or indirect thermal contact with the metallic layers, or at least one of the metallic layers (4, 4', 4", ...), of the insulation.

5. Storage container according to Claim 3 or 4, **characterized in that** the release lines, or at least one of the release lines (8 - 13), is or are in direct and/or indirect thermal contact with one or more process lines (5, 6, 7).

6. Use of a storage container according to one of the preceding claims as a movable storage container, in particular as a storage container for motor vehicles.

## Revendications

1. Récipient de stockage, notamment récipient de stockage pour liquides cryogéniques, de préférence pour de l'hydrogène liquide, présentant un récipient extérieur, au moins un récipient intérieur, une isolation disposée entre le récipient extérieur et le ou les récipients intérieurs et présentant au moins une couche métallique, ainsi que deux conduites de traitement ou plus, **caractérisé en ce que** la conduite de traitement ou au moins deux des conduites de traitement (5, 6, 7) présentent des moyens pour souffler du liquide cryogénique évaporé hors du ou des récipients intérieurs (2), et ces moyens pour souffler du liquide cryogénique évaporé sont réalisés de telle sorte qu'ils permettent une régulation de la quantité de gaz à souffler.

2. Récipient de stockage selon la revendication 1, **caractérisé en ce que** les moyens pour souffler du liquide cryogénique évaporé sont réalisés sous forme de soupapes (a-g), de préférence de soupapes de débordement, et/ou de diaphragmes.

3. Récipient de stockage selon la revendication 1 ou 2, **caractérisé en ce que** l'on prévoit en plus des conduites de traitement (5, 6, 7), au moins une conduite de soufflage (8-13), qui présente des moyens de soufflage, de préférence pour le soufflage régulé de liquide cryogénique évaporé.

4. Récipient de stockage selon la revendication 3, **caractérisé en ce que** la conduite de soufflage ou au moins l'une des conduites de soufflage (8-13) est en contact thermique direct et/ou indirect avec la couche ou au moins l'une des couches métalliques (4, 4', 4"...) de l'isolation.

5. Récipient de stockage selon la revendication 3 ou 4, **caractérisé en ce que** la conduite de soufflage ou au moins l'une des conduites de soufflage (8-13) est en contact thermique direct et/ou indirect avec une ou plusieurs conduites de traitement (5, 6, 7).

6. Utilisation d'un récipient de stockage selon l'une quelconque des revendications précédentes, en tant que récipient de stockage mobile, notamment en tant que récipient de stockage pour véhicules automobiles.
